# EUROPÄISCHE PATENTSCHRIFT

(11) **EP 3 379 750 B1**
(45) Veröffentlichungstag und Bekanntmachung des Hinweises auf die Patenterteilung: **13.05.2020**
(21) Anmeldenummer: 18160248.3
(22) Anmeldetag: 06.03.2018
(51) Int. Cl.: H04L 1/08, H04L 1/22

(54) **VERFAHREN ZUR VERARBEITUNG EINER ANFRAGENACHRICHT EINES STRASSENFAHRZEUGS UND SERVERANORDNUNG**
METHOD FOR PROCESSING A REQUEST MESSAGE OF A ROAD VEHICLE AND SERVER ARRANGEMENT
PROCÉDÉ DE TRAITEMENT D'UN MESSAGE DE DEMANDE D'UN VÉHICULE ROUTIER ET DISPOSITIF SERVEUR

(30) Priorität: 24.03.2017 DE 102017106364
(43) Veröffentlichungstag der Anmeldung: 26.09.2018
(73) Patentinhaber: Vector Informatik GmbH, 70499 Stuttgart (DE)
(72) Erfinder: Wolf, Jonas, 71069 Sindelfingen (DE)
(74) Vertreter: Patentanwälte Bregenzer und Reule Partnerschaftsgesellschaft mbB

(56) Entgegenhaltungen:
- EP-A2- 1 569 183
- WO-A1-2016/097459
- DE-A1-102015 216 900
- US-A1- 2004 199 662

## Beschreibung

Die Erfindung betrifft ein Verfahren zur Verarbeitung einer eine zu verarbeitende Information enthaltenden Anfragenachricht eines Steuergeräts eines Straßenfahrzeugs durch eine Serveranordnung gemäß dem Oberbegriff des Anspruchs 1 sowie eine Serveranordnung zur Durchführung des Verfahrens gemäß dem Oberbegriff des Anspruchs 7.

Ein derartiges Verfahren sowie eine Serveranordnung sind aus EP 1 569 183 A2 bekannt.

In modernen Straßenfahrzeugen ist eine Vielzahl von Steuergeräten im Einsatz, die beispielsweise eine Motorsteuerung, ein Navigationssystem oder dergleichen des Straßenfahrzeugs steuern und/oder überwachen. Die Steuergeräte sind in der Regel über ein Bordnetz des Kraftfahrzeugs oder Straßenfahrzeugs miteinander verbunden und tauschen Informationen untereinander aus.

Zur Verarbeitung komplexerer Aufgaben reicht jedoch die Verarbeitungskapazität, beispielsweise Prozessorleistung, eines Steuergeräts in einem Straßenfahrzeug in manchen Fällen nicht aus. Zudem sind Straßenfahrzeuge zukünftig auch in Netzwerke eingebunden, bei denen sie beispielsweise miteinander kommunizieren, um eine Gefahrensituation zu melden. Weiterhin ist es möglich, dass beispielsweise ortsfeste Sensoren oder Informationsverarbeitungsgeräte entlang einer Fahrbahn für die Straßenfahrzeuge angeordnet sind, die ihre Informationen unmittelbar oder über ein Netzwerk an die Straßenfahrzeuge übertragen, beispielsweise spontan bei Auftreten eines Ereignisses oder nach einer Abfrage.

Zur Informationsverarbeitung bei Steuergeräten für Straßenfahrzeuge sind einfache und zuverlässige, jedoch in manchen Fällen unkomfortable oder nur eingeschränkte Leistungsmerkmale aufweisende Algorithmen üblich. Somit ist es also ein Bedürfnis, anhand einer Serveranordnung, die man auch als eine Backend-Serveranordnung bezeichnen kann, eine kompliziertere und/oder komfortablere Informationsverarbeitung bereitzustellen.

Ausgehend davon ist es die Aufgabe der vorliegenden Erfindung, ein Verfahren sowie eine Serveranordnung zur Bearbeitung von Anfragenachrichten, die von einem Steuergerät eines Straßenfahrzeugs an die Serveranordnung gesendet werden, bereitzustellen.

Die Serveranordnung bzw. das Verfahren sollen möglichst sicher und zuverlässig arbeiten.

Zur Lösung der Aufgabe ist ein Verfahren zur Verarbeitung einer eine zu verarbeitende Information enthaltenden Anfragenachricht eines Steuergeräts eines Straßenfahrzeugs durch eine Serveranordnung gemäß der technischen Lehre des Anspruchs 1 vorgesehen.

Ferner ist zur Lösung der Aufgabe eine Serveranordnung gemäß der technischen Lehre des Anspruchs 7 vorgesehen.

Es ist ein Grundgedanke der vorliegenden Erfindung, dass die zu verarbeitenden Informationen nicht nur durch einen ersten Verarbeitungsserver, sondern durch einen zweiten, redundanten Verarbeitungsserver verarbeitet werden. Dadurch ist eine hohe Verarbeitungssicherheit gegeben. Nur wenn beide Server die in der Anfragenachricht enthaltene Information verarbeitet haben und ihre Redundanz-Antwortnachrichten gesendet haben, kann der Verteiler-Server die Antwortnachricht auf Basis der Redundanz-Antwortnachrichten generieren und/oder kann das Steuergerät anhand der beiden erhaltenen Redundanz-Antwortnachrichten, die beispielsweise in der Antwortnachricht des Verteiler-Servers einzeln oder in Zusammenfassung enthalten sind, weiterarbeiten.

Die Anfragenachrichten und/oder Antwortnachrichten sind zweckmäßigerweise durch verschiedene Algorithmen und Strukturmaßnahmen gesichert. Beispielsweise enthalten Sie eine Sequenz-Information, einen Identifizierer für die Anfrage bzw. die zugehörige Antwort sowie noch einen Integritäts-Check, beispielsweise einen CRC-Code, eine Prüfsumme oder dergleichen. Dies soll aber nicht einschränkend verstanden werden, weil selbstverständlich mehrere und unterschiedliche Integritätschecks bekannter Art möglich sind.

Die zu verarbeitende Information ist beispielsweise eine Anfrage, mit welcher Geschwindigkeit eine Fahrbahn vom Straßenfahrzeug genutzt werden kann. Dazu können beispielsweise Sensordaten bei der Serveranordnung bereitstehen, die beispielsweise eine Temperatur der Fahrbahn repräsentieren. Weiterhin kann die Serveranordnung Daten von anderen Straßenfahrzeugen aufweisen, sodass beispielsweise der Belegungszustand der Fahrbahn bei der Serveranordnung bekannt ist.

Nun könnte das Straßenfahrzeug oder dessen Steuergerät an sich auch ohne diese Information die Fahrbahnen nutzen, beispielsweise anhand von an Bord des Straßenfahrzeugs vorhandenen Sensoren, zum Beispiel Kameras, Radar oder dergleichen. Allerdings ist die Reichweite derartiger Sensorik begrenzt, weshalb die Fahrbahn nur mit einer vergleichsweise geringen Geschwindigkeit nutzbar ist, sozusagen Aufsicht der jeweiligen Sensorik.

Im Rahmen der Antwortinformation bzw. der Redundanz-Antwortnachrichten und der daraus generierten Antwortnachricht erhält das Straßenfahrzeug bzw. dessen Steuergerät weitere Informationen, nämlich beispielsweise den Fahrbahnzustand, die Belegung der Fahrbahn oder dergleichen. Die Antwortnachricht kann aber auch schon eine Auswertung der aktuellen Situation enthalten, sodass beispielsweise eine konkrete Empfehlung für eine günstige Geschwindigkeit des Straßenfahrzeugs in der Antwortnachricht enthalten ist. Somit können also kompliziertere Anfragen des Steuergeräts des Straßenfahrzeugs von der Serveranordnung bearbeitet und beantwortet werden. Bei Ausfall der Serveranordnung oder Störung der Kommunikation zwischen dem Steuergerät und der Serveranordnung ist dennoch ein sicherer Fahrbetrieb, beispielsweise mit der an Bord des Straßenfahrzeugs befindlichen Sensorik möglich.

Die Ende-zu-Ende-Überprüfung kann unidirektional vom Steuergerät zum jeweiligen Verarbeitungsserver oder vom Verarbeitungsserver zum Steuergerät erfolgen oder vorzugsweise bidirektional. Nachfolgend werden einige Varianten vorgestellt.

Erfindungsgemäß ist bei dem Verfahren vorgesehen, dass es eine Ende-zu-Ende-Überprüfung der Redundanz-Anfragenachricht oder zumindest der darin enthaltenen zu verarbeitenden Information durch den ersten Verarbeitungsserver und den zweiten Verarbeitungsserver, wobei die Ende-zu Ende-Überprüfung eine Überprüfung mindestens einer durch das Steuergerät bereitgestellten Prüfinformation, insbesondere einer durch das Steuergerät mitgeteilten Zeitinformation und/oder einer durch das Steuergerät erzeugten Prüfsumme, umfasst. Der erste und der zweite Verarbeitungsserver weisen erfindungsgemäß Überprüfungsmittel zu einer Ende-zu-Ende-Überprüfung der Redundanz-Anfragenachricht oder zumindest der darin enthaltenen zu verarbeitenden Information auf, wobei die Ende-zu Ende-Überprüfung eine Überprüfung mindestens einer durch das Steuergerät bereitgestellten Prüfinformation, insbesondere einer durch das Steuergerät mitgeteilten Zeitinformation und/oder einer durch das Steuergerät erzeugten Prüfsumme umfasst.

Weiterhin vorteilhaft ist es, wenn die ersten und zweiten Verarbeitungsserver einander sozusagen kennen. Eine Maßnahme sieht vor, dass der Verteiler-Server mit der ersten Redundanz-Anfragenachricht eine Adressinformation des zweiten Verarbeitungsservers an den ersten Verarbeitungsserver und mit der zweiten Redundanz-Anfragenachricht eine Adressinformation des ersten Verarbeitungsservers an den zweiten Verarbeitungsserver versendet. Bei dem Verteiler-Server ist also zweckmäßig, wenn er zum Versenden einer Adressinformation des zweiten Verarbeitungsservers im Zusammenhang mit der ersten Redundanz-Anfragenachricht an den ersten Verarbeitungsserver und zum Versenden einer Adressinformation des ersten Verarbeitungsservers im Zusammenhang mit der zweiten Redundanz-Anfragenachricht an den zweiten Verarbeitungsserver ausgestaltet ist. Die Adressinformation kann beispielsweise eine Server-Identifizierungsnummer sein. Der Vorteil ist dabei, dass der eine redundante Verarbeitungsserver beim anderen redundanten Verarbeitungsserver Anfragen stellen kann, dass sich die Verarbeitungsserver untereinander abstimmen oder dergleichen. Die Verarbeitungsserver weisen zweckmäßigerweise Kommunikationsschnittstellen auf, mit denen sie untereinander kommunizieren können. Beispielsweise können die bereits ohnehin vorhandenen Kommunikationsschnittstellen, der Verarbeitungsserver dazu genutzt werden, dass der eine Verarbeitungsserver Nachrichten zum anderen Verarbeitungsserver sendet und umgekehrt.

Zu den Kommunikationsschnittstellen ist anzumerken, dass sie beispielsweis eine Internet-Schnittstelle, eine Mobilfunk-Schnittstelle oder dergleichen umfassen können. Es ist möglich, dass auch spezielle Schnittstellen definiert werden, die mit Kommunikationsnetzwerken kompatibel sind, die speziell für die Kommunikation zwischen Steuergeräten und Verarbeitungsservern bzw. der Serveranordnung und/oder für die Kommunikation innerhalb der Serveranordnung, beispielsweise zwischen den Verarbeitungsservern und/oder dem Verteiler-Server und mindestens einem Verarbeitungsserver vorteilhaft sind.

Vorteilhaft ist vorgesehen, dass der erste Verarbeitungsserver und der zweite Verarbeitungsserver anhand der erhaltenen Adressinformationen einander jeweils mindestens eine Überprüfungsnachricht zur Überprüfung ihrer wechselseitigen Redundanz und/oder zur Überprüfung, dass sie auf physikalisch getrennten Verarbeitungsplattformen angeordnet sind, senden. Bei dem Verarbeitungsserver ist zweckmäßigerweise vorgesehen, dass er anhand von im Zusammenhang mit der jeweiligen ersten oder zweiten Redundanz-Anfragenachricht erhaltenen Adressinformationen des jeweils anderen ersten oder zweiten Redundanz-Verarbeitungsservers zum Versenden und/oder Empfangen einer Überprüfungsnachricht zur Überprüfung einer wechselseitigen Redundanz der Verarbeitung und/oder zur Überprüfung, dass die Verarbeitungsserver auf physikalisch getrennten Verarbeitungsplattformen angeordnet sind, ausgestaltet ist. Die Überprüfungsnachricht wird beispielsweise vom einen Verarbeitungsserver zum anderen Verarbeitungsserver gesendet, so dass der empfangene Verarbeitungsserver aufgrund der Überprüfungsnachricht bereits weiß, dass ein redundanter, vorzugsweise einwandfrei arbeitender weiterer Verarbeitungsserver mit der Redundanz-Abfragenachricht bzw. der Abfragenachricht, die der Verteiler-Server empfangen hat, beschäftigt und betraut ist.

Physikalisch getrennte Verarbeitungsplattformen umfassen beispielsweise unterschiedliche Prozessoren, insbesondere Prozessoren auf unterschiedlichen Server-Plattformen. Die Verarbeitungsserver sind also vorzugsweise nicht auf derselben virtuellen Maschine angeordnet bzw. auf demselben Server, der dann zur Bereitstellung von Verarbeitungsservern virtuelle Maschinen bereitstellt. Der grundsätzliche Gedanke ist dabei, dass bei Ausfall oder einer Störung des einen Verarbeitungsservers bzw. dessen Verarbeitungsplattform der andere Verarbeitungsserver auf seiner Plattform zumindest ein anderes Ergebnis, d.h. eine andere Antwortnachricht produziert. Aufgrund der Abweichung zwischen den Antwortnachrichten, die von der sozusagen korrekt funktionierenden Verarbeitungsplattform und von der nicht einwandfrei funktionierenden Verarbeitungsplattform aus gesendet werden, nämlich von deren Verarbeitungsservern, kann beispielsweise der Verteilserver und/oder das Steuergerät erkennen, dass die Abfragenachricht nicht oder nicht korrekt bearbeitet wurde. Mithin ermöglicht dieses Konzept also, dass an die Hardware bzw. die Verarbeitungsplattformen, insbesondere deren Betriebssysteme, die verwendeten Compiler und dergleichen keine überhöhten Anforderungen gestellt werden.

Zweckmäßigerweise ist bei dem Verfahren vorgesehen, dass der erste Verarbeitungsserver und der zweite Verarbeitungsserver eine in der jeweils zu versendenden Redundanz-Antwortnachricht enthaltene Antwortinformation auf zumindest teilweise oder vollständige bitweise Übereinstimmung vor dem Versenden der Antwortinformation in der ersten Redundanz-Antwortnachricht und der zweiten Redundanz-Antwortnachricht abgleichen. Bei mindestens einem Verarbeitungsserver oder beiden Verarbeitungsservern ist es vorteilhaft, wenn er zum Abgleich einer in der jeweils zu versendenden Redundanz-Antwortnachricht enthaltenen Antwortinformation auf zumindest teilweise oder vollständige bitweise Übereinstimmung vor dem Versenden der Antwortinformation in der von ihm zu versendenden Redundanz-Antwortnachricht mit dem jeweils anderen ersten oder zweiten Verarbeitungsserver ausgestaltet ist. Mindestens ein Verarbeitungsserver oder beide Verarbeitungsserver ist oder sind zum Abgleich einer in der jeweils zu versendenden Redundanz-Antwortnachricht enthaltenen Antwortinformation auf zumindest teilweise oder vollständige bitweise Übereinstimmung vor dem Versenden der Antwortinformation in der von ihm zu versendenden Redundanz-Antwortnachricht mit dem jeweils anderen ersten oder zweiten Verarbeitungsserver ausgestaltet. So ist es beispielsweise möglich, dass beim einen Verarbeitungsserver eine erste Software die Anfragenachricht bearbeitet, während bei dem anderen Verarbeitungsserver eine mit einem anderen Compiler oder auf einem anderen Betriebssystem laufende Software bzw. ein Antwortmodul die Nachricht bearbeitet. Somit würden die daraus generierten Antwortinformationen für die jeweiligen Antwortnachrichten voneinander abweichen, wenn auch in der Regel nur geringfügig. So kann beispielsweise eine Fließkommaoperation beim einen Anwendungsprogramm bzw. einen Verarbeitungsserver anders ablaufen als beim anderen Verarbeitungsserver. Durch die wechselseitige Kommunikation bzw. Abstimmung der bereitzustellenden Antwort können die Verarbeitungsserver sicherstellen, dass der Verteiler-Server zumindest im Wesentlichen identische Antworten von beiden Verarbeitungsservern erhält. Es ist dabei möglich, dass die Verarbeitungsserver nur bis zu einem gewissen Umfang eine Abgleichung durchführen, d.h. dass beispielsweise nur dann, wenn eine Diskrepanz zwischen den an sich zu versendenden Antwortinformationen nur geringfügig ist, beispielsweise ein an einer nachrangigen Kommastelle festzustellen ist. Mithin soll also dieses Prozedere nicht dafür sorgen, dass gleichmäßig falsche oder verfälschte Antwortinformationen versendet werden, sondern dass die Antwortinformationen zumindest in Bezug auf ihren relevanten Anteil gleich oder gleichartig sind, so dass die nachfolgende Weiterverarbeitung der Antwortinformation durch den Verteilserver und/oder das Steuergerät vereinfacht ist. Eine Plausibilitätsprüfung wird also sozusagen in das Backend bzw. in die Serveranordnung, insbesondere zu den Verarbeitungsservern, verlagert, ohne dass das Steuergerät damit unbedingt belastet sein muss.

Vorzugsweise stellen der erste Verarbeitungsserver und/oder der zweite Verarbeitungsserver eine zur Auswertung durch das Steuergerät vorgesehene Prüfinformation der durch den Verteiler-Server zu versendenden Antwortnachricht in der jeweiligen ersten und zweiten Redundanz-Antwortnachricht bereit. Bei mindestens einem Verarbeitungsserver sind vorteilhaft Bereitstellungsmittel zur Bereitstellung einer zur Auswertung durch das Steuergerät vorgesehenen Prüfinformation der durch den Verteiler-Server zu versendenden Antwortnachricht in der jeweiligen ersten oder zweiten Redundanz-Antwortnachricht vorgesehen. So kann beispielsweise vorgesehen sein, dass die Antwortnachricht, welche vom Verteiler-Server versendet wird, mindestens einen Anteil der Antwortinformation verändert, beispielsweise im Rahmen der Verknüpfungsoperation, bei der die Redundanz-Antwortnachrichten miteinander verknüpft werden. So können beispielsweise die Antwortinformationen einer Oder-Verknüpfung unterzogen werden, wobei Teile der Antwortinformationen dabei ihren Status ändern, beispielsweise von logisch "0" auf logisch "1". Dieser Veränderung der Antwortinformation greift der jeweilige Verarbeitungsserver sozusagen vor und erzeugt die Prüfinformation auf Basis der veränderten Antwortinformation und setzt dann die Antwortinformation sozusagen wieder zurück in den Zustand vor der Prüfung, bevor er sie im Rahmen der jeweiligen ersten oder zweiten Redundanz-Antwortnachricht an den Verteiler-Server weitersendet. Bei der Teil-Antwortinformation kann es sich beispielsweise um eine Adresskennung, eine Sequenzkennung oder dergleichen handeln.

Es ist weiterhin möglich, dass beispielsweise eine Adressinformation des Verteiler-Servers in die Antwortnachricht bzw. die durch die Prüfinformation repräsentierte Antwortinformation eingefügt wird, dann die Prüfinformation erstellt und anschließend die Adressinformation des Verteilservers wieder in eine andere Adresskennung, beispielsweise eines Verarbeitungsservers, zurück geändert wird. Der Verteilserver braucht somit keine eigenen Mittel zur Erzeugung einer Prüfinformation aufzuweisen.

Besonders bevorzugt ist die nachfolgende Vorgehensweise:
Zweckmäßigerweise ist bei dem Verfahren vorgesehen, dass mindestens einer der Verarbeitungsserver eine ihm zugeordnete Adresskennung durch eine in der durch den Verteiler-Server zu versendenden Antwortnachricht enthaltene Adresskennung zur Erzeugung der Prüfinformation verwendet und/oder dass mindestens einer der Verarbeitungsserver eine durch die Prüfinformation, insbesondere eine Prüfsumme, überprüfte Information in der Redundanz-Antwortnachricht durch eine alternative Information, insbesondere eine ihm zugeordnete Adresskennung, ersetzt. Die Bereitstellungsmittel des mindestens einen Verarbeitungsservers ersetzen zweckmäßigerweise eine dem Verarbeitungsserver zugeordnete Adresskennung durch eine in der durch den Verteiler-Server zu versendenden Antwortnachricht enthaltene Adresskennung zur Erzeugung der Prüfinformation verwenden und/oder eine durch die Prüfinformation, insbesondere eine Prüfsumme, überprüfte Information in der Redundanz-Antwortnachricht durch eine alternative Information, insbesondere eine dem Verarbeitungsserver zugeordnete Adresskennung. So greift also der jeweilige Verarbeitungsserver quasi der Erzeugung der Antwortnachricht insoweit vor, als er die in der Antwortnachricht, welche der Verteiler-Server sendet, die Adresskennung zur Erzeugung der Prüfinformation, beispielsweise einer Prüfsumme, verwendet. Mithin erzeugt also der Verarbeitungsserver bereits die Prüfinformation, welche an sich erst der Verteiler-Server erzeugen würde, wenn er diese Aufgabe hätte. Auf diesem Wege ist es möglich, dass beim Verteiler-Server quasi keine oder nur eine geringe Intelligenz ist, dieser also möglich einfach aufgebaut werden kann, während die eigentliche Intelligenz, nämlich die Fähigkeit beispielsweise eine Prüfinformation oder eine Integrität der Antwortnachricht bereitzustellen, beim jeweiligen Verarbeitungsserver liegt.

Zweckmäßig ist weiterhin bei dem Verfahren, dass das Erzeugen der Antwortnachricht mindestens eine Vergleichsoperation und/oder Verknüpfungsoperation enthält, bei der in der ersten Redundanz-Antwortnachricht enthaltene erste Daten und in der zweiten Redundanz-Antwortnachricht enthaltene zweite Daten durch den Verteiler-Server miteinander verglichen oder, insbesondere anhand einer logischen Oder-Operation, verknüpft werden. Bei dem Verteiler-Server ist vorteilhaft vorgesehen, dass die Erzeugungsmittel zum Erzeugen der Antwortnachricht anhand mindestens einer Vergleichsoperation und/oder Verknüpfungsoperation ausgestaltet sind, bei der in der ersten Redundanz-Antwortnachricht enthaltene erste Daten und in der zweiten Redundanz-Antwortnachricht enthaltene zweite Daten durch den Verteiler-Server miteinander verglichen oder, insbesondere anhand einer logischen Oder-Operation, verknüpft werden. Aus diesem Konzept wird deutlich, dass der Verteiler-Server zweckmäßigerweise möglichst wenig "Intelligenz" aufweisen muss, d.h. dass er die Redundanz-Antwortnachricht der beiden Verarbeitungsserver in einfacher Weise miteinander verknüpft, ohne sie inhaltlich zu bearbeiten. Dabei ist eine Oder-Operation, bei der die Redundanz-Antwortnachrichten, zumindest aber deren Antwortinformationen, sozusagen aufeinandergelegt werden, um eine eindeutige Information zu erhalten, besonders bevorzugt. Wenn dann noch zusätzlich bereits die Prüfinformation durch den Verarbeitungsserver vorbereitet ist, wird auch die Prüfinformation mit der jeweils anderen Prüfinformation der anderen Redundanz-Antwortnachricht verknüpft, insbesondere anhand einer Oder-Verknüpfung. Wenn dann also von beiden Verarbeitungsservern sozusagen dieselbe oder inhaltlich dieselbe Redundanz-Antwortnachricht kommt und eine zugeordnete, die Inhalte der jeweiligen ersten und zweiten Redundanz-Antwortnachricht qualifizierte Prüfinformation verknüpft wird, stellt die eindeutige und vom Steuergerät wieder auszuwertende Prüfinformation sozusagen sicher, dass in beiden Redundanz-Antwortnachrichten der Verarbeitungsserver dieselbe zur Auswertung durch das Steuergerät anstehende Information enthalten war. An die Architektur und Qualität des Verteiler-Servers sind dadurch nur geringe Anforderungen zu stellen, was ein erhöhtes Sicherheitsniveau darstellt. Dies wird auch durch die nachfolgende Erläuterung und vorteilhafte Ausgestaltung noch veranschaulicht:
Der Verteiler-Server die Antwortnachricht durch eine logische Oder-Verknüpfung der ersten Redundanz-Antwortnachricht mit der zweiten Redundanz-Antwortnachricht erzeugt, wobei die Antwortnachricht vorzugsweise mindestens eine zur Überprüfung durch das Steuergerät vorgesehene Prüfinformation enthält, die für den durch die Prüfinformation als geprüft qualifizierten Inhalt der Antwortnachricht erst nach der logischen Oder-Verknüpfung der Redundanz-Antwortnachrichten richtig ist. Der Verteiler-Server zeichnet sich dementsprechend vorteilhaft dadurch aus, dass die Erzeugungsmittel die Antwortnachricht durch eine logische Oder-Verknüpfung der ersten Redundanz-Antwortnachricht mit der zweiten Redundanz-Antwortnachricht erzeugen, wobei die Antwortnachricht vorzugsweise mindestens eine zur Überprüfung durch das Steuergerät vorgesehene Prüfinformation enthält, die für den durch die Prüfinformation als geprüft qualifizierten Inhalt der Antwortnachricht erst nach der logischen Oder-Verknüpfung der Redundanz-Antwortnachrichten richtig ist.

Nachfolgend wird ein Ausführungsbeispiel der Erfindung anhand der Zeichnung erläutert. Es zeigen:

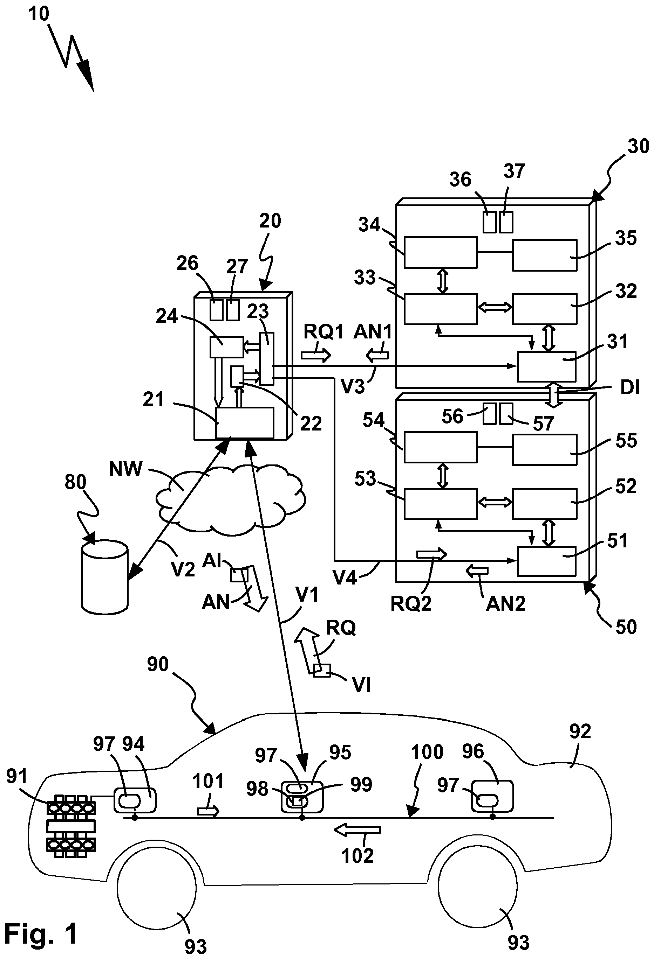

- Figur 1: eine schematische Darstellung einer erfindungsgemäßen Serveranordnung im Zusammenhang mit einem Straßenfahrzeug sowie einem Steuergerät in dem Straßenfahrzeug,
- Figur 2: ein Ablaufdiagramm einer Kommunikation zwischen dem Steuergerät sowie der Serveranordnung gemäß Figur 1,
- Figur 3: eine Antwortnachricht eines ersten Verarbeitungsservers vor der Erstellung einer Prüfinformation,
- Figur 4: die Antwortnachricht gemäß Figur 3 mit Prüfinformation,
- Figur 5: die Antwortnachricht gemäß Figuren 3, 4 nach einer Überarbeitung einer Adressinformation,
- Figur 6: eine Antwortnachricht eines zweiten Verarbeitungsservers der Serveranordnung gemäß vorstehender Figuren vor der Erstellung einer Prüfinformation,
- Figur 7: die Antwortnachricht gemäß Figur 6 mit Prüfinformation,
- Figur 8: die Antwortnachricht gemäß Figur 7 nach dem Ersetzen einer Adressinformation.

Ein Straßenfahrzeug 90 ist durch einen Antriebsmotor 91 antreibbar. Der Antriebsmotor 91 ist beispielsweise ein Elektromotor, Verbrennungsmotor oder eine Kombination davon. Der Antriebsmotor 91 ist in einer Karosserie 92 angeordnet, die auf Rädern 93 auf einem Untergrund, insbesondere einer Straße, rollen kann. Bei dem Straßenfahrzeug 90 handelt es sich vorzugsweise um einen Personenkraftwagen, wobei es selbstverständlich auch ein Lastwagen bzw. Nutzfahrzeug, ein Omnibus oder dergleichen, sein kann.

Das Straßenfahrzeug 90 weist einen internen Bus 100 auf, an den Steuergeräte 94, 95, 96 angeschlossen sind. Die Steuergeräte 94-96 weisen beispielsweise jeweils einen Prozessor 97 zur Ausführung von einem oder mehreren Programmen 99 auf, die in Speicher 98 der Steuergeräte 94-96 gespeichert sind. Die Programme 99 können beispielsweise Funktionen des Straßenfahrzeugs 90 steuern und/oder überwachen. Beispielsweise steuert das Steuergerät 94 den Antriebsmotor 91 an. Das Steuergerät 95 dient beispielsweise einem automatischen Fahrbetrieb, einer Sicherheitsüberwachung des Kraftfahrzeugs 90 oder dergleichen. Zum Austausch von wechselseitigen Informationen können die Steuergeräte 94-96 über den Bus 100, beispielsweise einen CAN-Bus, Nachrichten versenden, von denen exemplarisch Busnachrichten 101 und 102 dargestellt sind. Somit kann beispielsweise das Steuergerät 95 eine jeweilige Motordrehzahl des Antriebsmotors 91 erfahren oder den Antriebsmotor 91 aktiv ansteuern, beispielsweise seine Leistung erhöhen oder absenken, je nach Fahrsituation. Das Programm 99 (es können auch weitere Programme bei Steuergerät 95 vorgesehen sein), kann jedenfalls Grundfunktionen an Bord des Straßenfahrzeugs 90 leisten, ist jedoch für erweiterte Funktionen, komplexere Anforderungen oder dergleichen, nicht ausgelegt. Für derartige Aufgaben steht dem Steuergerät 95 eine Serveranordnung 10 zur Verfügung, die nachfolgend erläutert wird.

Die Serveranordnung 10 ist über ein Kommunikationsnetz NW durch das Straßenfahrzeug 90, insbesondere die Steuergeräte 94-96, erreichbar. Das Kommunikationsnetz NW umfasst beispielsweise ein Mobilfunknetz, ein drahtloses Funknetz, ein Wireless LAN (WLAN) oder dergleichen. Kombinationen sind möglich, d.h. dass das Kommunikationsnetz NW nicht unbedingt ein einheitliches Netz sein muss, sondern dass es im Rahmen der Erfindung liegt, wenn das Kommunikationsnetz NW mindestens zwei voneinander verschiedene physikalische Netzwerke enthält, beispielsweise eine Kombination aus WLAN und Mobilfunknetz.

Außerdem kann ein Sensor 80, der beispielsweise eine Witterungssituation, einen Fahrbahnzustand, eine Belegung einer Fahrbahn oder dergleichen erfassen kann, über das Kommunikationsnetz NW mit der Serveranordnung 10 verbunden.

Die Serveranordnung 10 umfasst einen Verarbeitungsserver 30 und einen Verarbeitungsserver 50, die erste und zweite, zueinander redundante Verarbeitungsserver darstellen. Nun wäre es prinzipiell möglich, dass das Steuergerät 95 die Verarbeitungsserver 30, 50 direkt adressiert, d.h. eine Anfragenachricht RQ an beide Verarbeitungsserver 30, 50 zur weiteren Verarbeitung sendet. Vorliegend ist jedoch ein Verteilerkonzept gewählt, bei dem ein Dispatcher oder Verteiler-Server 20 die beiden Verarbeitungsserver 30, 50 anspricht und von diesen erhaltene Antworten für das Steuergerät 95 oder weitere, in der Zeichnung nicht dargestellte Steuergeräte oder andere Straßenfahrzeuge verarbeitet.

Der Dispatcher oder Verteiler-Server 20 hat eine Kommunikationsschnittstelle 21 zur Kommunikation über das Kommunikationsnetz NW mit dem Steuergerät 95 und dem Sensor 80 sowie eine weitere Kommunikationsschnittstelle 23 zur Kommunikation mit den Servern 30, 50. Die Kommunikationsschnittstellen 21, 23 können durch ein und dieselbe Kommunikationsschnittstelle realisiert sein, beispielsweise Schnittstellen zum Internet sein. Es ist aber auch möglich, dass beispielsweise die beiden Verarbeitungsserver 30, 50 über ein lokales Netzwerk, insbesondere ein LAN, mit dem Verteiler-Server 20 verbunden sind, wobei das lokale Netzwerk vorzugsweise ein drahtgebundenes Netzwerk ist, während die Kommunikationsschnittstelle 21 eine Funk-Schnittstelle oder jedenfalls eine Kommunikationsschnittstelle für eine drahtlose Kommunikation ist oder umfasst.

Ohne weiteres können dem Verteiler-Server 20 Netzwerkkomponenten, beispielsweise Switche, Hubs oder dergleichen vorgeschaltet oder nachgeschaltet sein. Darauf kommt es im Detail nicht an, weil die sichere und zuverlässige Bearbeitung der Anfragenachricht RQ optimal gewährleistet ist, wie nachfolgend deutlich wird.

Mithin ist es also möglich, dass beispielsweise die Verbindungen V1, V2, die zwischen dem Steuergerät 95 und dem Sensor 80 einerseits und dem Verteiler-Server 20 andererseits über das Kommunikationsnetz NW führen, Störungen aufweisen können. Weiterhin ist auch Störungen bei einem oder beiden der Verarbeitungsserver 30, 50 Rechnung getragen, was nachfolgend deutlicher wird.

Der Verteiler-Server 20 weist beispielsweise einen Prozessor 26 sowie einen Speicher 27 auf, in welchem Programmmodule, beispielsweise das nachfolgend erläuterte Verteilermodul 22 und/oder eines Erzeugungsmoduls 24 gespeichert sein können, wobei Programmcode des Verteilermoduls 22 und des Erzeugungsmoduls 24 durch den Prozessor 26 zur Ausführung der nachfolgend erläuterten Schritte ausgestaltet ist.

Das Verteilermodul 22 generiert aus der empfangenen Anfragenachricht RQ eine erste und eine zweite Redundanz-Anfragenachricht RQ1, RQ2, die jeweils eine zu verarbeitende Information VI, die in der Anfragenachricht RQ enthalten ist, enthalten. Es ist auch möglich, dass die Anfragenachrichten RQ1, RQ2 quasi der Anfragenachricht RQ entsprechen, wobei beispielsweise lediglich noch eine Adressinformation für den Verarbeitungsserver 30 und 50 eingetragen werden.

Die Verarbeitungsserver 30, 50 sind ähnlich aufgebaut und weisen beispielsweise Prozessoren 36, 56 sowie Speicher 37, 57 auf. Weiterhin haben die Verarbeitungsserver 30, 50 jeweils ein Betriebssystem 31, 51. Die Betriebssysteme 31, 51 können ebenso wie die Hardware der Verarbeitungsserver 30, 50 gleich oder unterschiedlich sein, was die Betriebssicherheit deutlich erhöht. Insbesondere ist es auf diesem Wege leicht möglich, Fehlersituationen bei einem der beiden Server 30, 50 zu erkennen und zu vermeiden. Die Verarbeitungsserver 30, 50 weisen weiterhin eine Kommunikationsschnittstelle 32, 52 auf, die beispielsweise einen Network-Stack umfasst oder dadurch gebildet ist. Die Kommunikationsschnittstelle 32 ist mit einer Verteilerschnittstelle 33, 53 verbunden, die ihrerseits wiederum mit einem Verarbeitungsprogramm 34, 54, insbesondere einem Programm zur Verarbeitung der Information VI, kommuniziert.

Die Verarbeitungsprogramme 34, 54 umfassen beispielsweise Programmcode, der durch den Prozessor 36, 56 ausführbar ist. Das Programm oder Erzeugungsmittel 34 greift beispielsweise auf Bibliotheken 35, 55 zu, um seine Aufgaben zu erfüllen, nämlich beispielsweise die Information VI zu verarbeiten.

Die Verarbeitungsprogramme 34, 54 erzeugen auf Basis der erhaltenen Redundanz-Anfragenachrichten RQ1 und RQ2 Redundanz-Antwortnachrichten AN1 und AN2, welche über die Verbindungen V3, V4 zurück an den Verteiler-Server 20 übertragen werden.

Die Redundanz-Antwortnachrichten AN1 und AN2 enthalten beispielsweise eine Antwortinformation AI, welche aufgrund der Information VI erstellt worden ist. Zur Erzeugung der Antwortinformation AI greifen die Verarbeitungsprogramme 34, 54 beispielsweise auf Informationen des Sensors 80 zurück. So kann die Antwortinformation AI beispielsweise den Zustand einer Fahrbahn abbilden, insbesondere ob die Fahrbahn für das Straßenfahrzeug 90 frei ist oder durch ein anderes Fahrzeug belegt ist und/oder ob die Fahrbahn witterungsbedingt nur mit einer vorbestimmten Geschwindigkeit befahrbar ist.

Die Redundanz-Antwortnachrichten AN, AN2 empfängt der Verteiler-Server 20 beispielsweise an der Kommunikationsschnittstelle 23, von wo aus sie zu dem Erzeugungsmodul 24 und mithin einem Erzeugungsmittel 66 gelangen. Das Erzeugungsmodul 24 oder Erzeugungsmittel 66 erzeugt auf Basis der Redundanz-Antwortnachrichten AN1 und AN2 eine Antwortnachricht AN, die der Verteiler-Server 20 aus der Verbindung V1 an das Steuergerät 95 sendet. Das Erzeugungsmittel 66 verknüpft die Redundanz-Antwortnachrichten AN1, AN2 insbesondere anhand einer Oder-Verknüpfung.

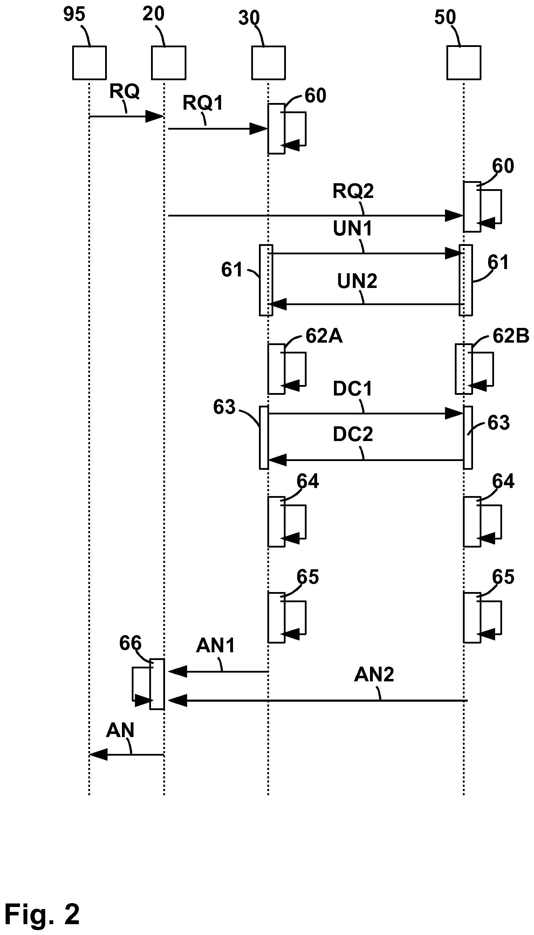

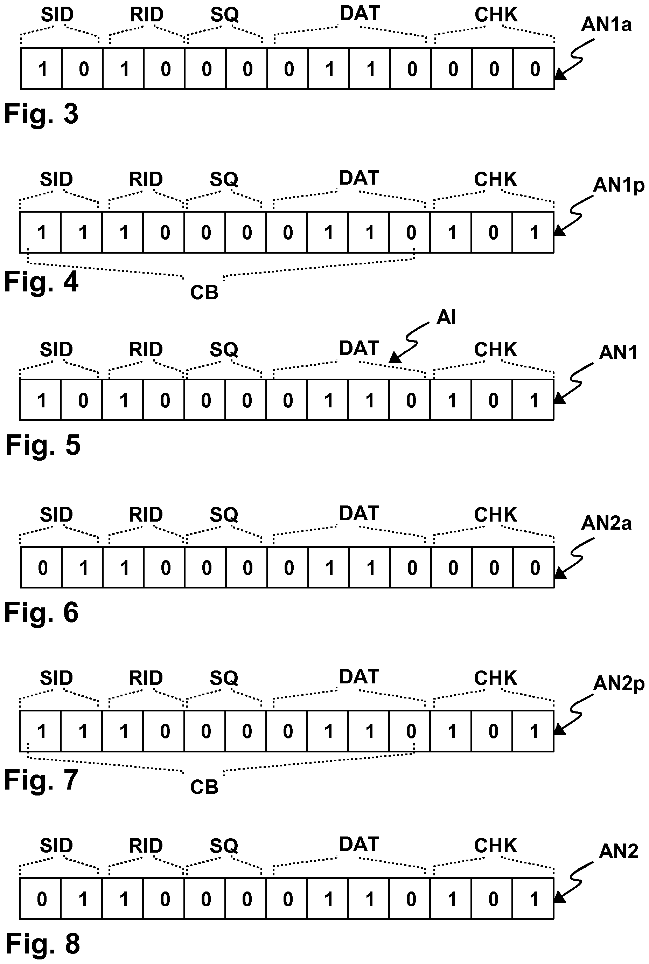

In dem in Figur 2 dargestellten zeitlichen Diagramm sind die einzelnen Funktionen, einschließlich optionaler Schritte, verdeutlicht. Beispielsweise werden die von dem Verteiler-Server 20 gesendeten Redundanz-Anfragenachrichten RQ1 und RQ2 anhand von Überprüfungsmitteln 60 einer Ende-zu-Ende-Überprüfung unterzogen. Dabei wird beispielsweise die Integrität der Redundanz-Anfragenachricht RQ1, RQ2 überprüft. Beispielsweise hat die Redundanz-Anfragenachricht RQ1, RQ2 eine Struktur entsprechend Figur 5, die im Zusammenhang mit der Redundanz-Antwortnachricht AN1 erläutert ist. Das Überprüfungsmittel 60 prüft beispielsweise, ob eine Sequenzinformation SID, insbesondere ein Zeitstempel, gültig ist. Weiterhin kann eine Prüfinformation CHK durch das Überprüfungsmittel 60 überprüft werden. Jedenfalls stellt das Überprüfungsmittel 60 sicher, dass die Redundanz-Anfragenachricht RQ1, RQ2 valide ist.

Ein Überprüfungsmittel 61 der Verarbeitungsserver 30, 50 welches beispielsweise durch die Verteilerschnittstelle 33, 53 dargestellt sein kann, ermittelt, ob die Verarbeitungsserver 30, 50 auf unterschiedlichen Hardware-Plattformen laufen.

Dazu verwenden die Verarbeitungsserver 30, 50 beispielsweise eine Adressinformation, die sie von dem Verteiler-Server 20 erhalten und die den jeweils anderen Verarbeitungsserver 30, 50 charakterisiert. So kann beispielsweise die Adressinformation oder Adresse des Verarbeitungsservers 50 in der Redundanz-Anfragenachricht RQ1 enthalten oder im Nachgang zu dieser vom Verteiler-Server 20 an den Verarbeitungsserver 30 gesendet werden. Sinngemäß kann auch der Verteiler-Server 20 an den Verarbeitungsserver 50 die Adressinformation des Verarbeitungsservers 30 im Rahmen der Redundanz-Anfragenachricht RG2 senden oder in Zusammenhang damit. Anhand der erhaltenen Adressinformationen kann beispielsweise der Verarbeitungsserver 30 eine Überprüfungsnachricht UN1 an den Verarbeitungsserver 50 senden, während der Verarbeitungsserver 50 anhand der Adressinformation, die den Verarbeitungsserver 30 kennzeichnet, eine Überprüfungsnachricht UN2 an diesen sendet. Allein schon der Erhalt einer Überprüfungsnachricht UN1 oder UN2 durch den Verarbeitungsserver 30, 50 signalisiert dem jeweiligen Verarbeitungsserver 30, 50, dass ein anderer, redundanter Verarbeitungsserver die jeweilige Redundanz-Anfragenachricht RQ1, RQ2 bearbeitet. Es versteht sich, dass im Rahmen der Überprüfung, die die Überprüfungsmittel 61 leisten, auch weitere Überprüfungsnachrichten versendet werden können.

Die Verarbeitungsprogramme 34, 54 oder jedenfalls die Programme 34, 54 erzeugen in einer Funktion als Erzeugungsmittel 62A, 62B anhand der zu verarbeitenden Information VI eine Antwortinformation AI.

Es ist möglich, dass wie in Figur 2 schematisch dargestellt, Abgleichmittel 63 der Verarbeitungsserver 30, 50 Abgleichnachrichten DC1 und DC2 austauchen, beispielsweise über das Kommunikationsnetz NW oder anhand einer direkten Kommunikation DI, um die Antwortinformation AI abzugleichen, so dass sie insbesondere bitgleich ist.

Bereitstellungsmittel 64 stellen eine Prüfinformation CHK in der jeweils zu versendenden Redundanz-Antwortnachricht AN1, AN2 her. Mit 65 ist in Figur 2 noch eine Maskierung bezeichnet, bei der Adressinformationen der bereits geprüften und mit der Prüfinformation CHK versehenen Antwortnachrichten AN1, AN2 versehen werden.

Die Antwortnachrichten AN1, AN2 werden im Rahmen einer Erzeugungsoperation, insbesondere einer Verknüpfungsoperation, durch das Erzeugungsmodul 24, welches ein Erzeugungsmittel 66 darstellt, des Verteiler-Servers 20 miteinander verknüpft, insbesondere Oder-verknüpft, um auf diesem Wege die Antwortnachricht AN zu generieren, welche das Verteilermodul 20 an das Steuergerät 95 sendet.

Die Funktion des Bereitstellungsmittels 64 und der anschließenden Maskierung 65 werden nachfolgend anhand der Figuren 3-8 näher erläutert.

In den Figuren 3 und 6 sind die Antwortnachrichten AN1 und AN2 sozusagen in einem Rohzustand, noch ohne gültige Prüfinformation CHK als Antwortnachrichten AN1a und AN2a dargestellt. Die Roh-Antwortnachrichten AN1a und AN2a enthalten jeweils eine Sequenzinformation SQ, beispielsweise einen Zeitstempel und/oder eine Sequenzzähler. Weiterhin enthalten die Redundanz-Antwortnachrichten AN1a, AN2a beispielsweise die Antwortinformation AI im Rahmen von Daten DAT. Ferner sind in ihnen beispielsweise die Adressdaten bzw. Adressinformationen, beispielsweise Serveridentitätskennungen, der Verarbeitungsserver 30, 50 enthalten. Schließlich enthalten die Antwortnachrichten AN1a und AN1b bereits einen Identifizierer für die Anfragenachricht RQ beispielsweise eine Request ID oder einen Request-Identifizierer RID.

Die Bereitstellungsmittel 64 tragen in die rohen Redundanz-Antwortnachricht AN1a und AN2a entsprechend Figur 5 und Figur 7 eine alternative Adressinformation SID ein, die sich aus einer Oder-Verknüpfung der Adressinformationen SID der Verarbeitungsserver 30, 50 ergibt, beispielsweise logisch "1.1" entsprechend einer Oder-Verknüpfung von logisch "1.0" (Adresse des Verarbeitungsservers 30) und logisch "0.1" entsprechend der Adresse des Verarbeitungsservers 50.

Sodann erzeugen die Bereitstellungsmittel 64 die Prüfinformation CHK, sodass die Antwortnachricht AN1p und AN2p, also eine Prüfsumme oder Prüfinformation enthaltende Antwortnachricht erzeugt ist. Beispielsweise wird der Erzeugung der Prüfinformation CHK ein Abschnitt CB der jeweiligen Antwortnachricht AN1p und AN2p zugrunde gelegt beziehungsweise auf deren Basis die Prüfinformation CHK erstellt. Der Abschnitt CB umfasst beispielsweise die Adressinformation SID, den Request-Identifizierer RID, die Adressinformationen SID, die Sequenzinformation SQ und die Daten DAT.

Die Maskierung 65 wird durch die in Figuren 5 und 8 dargestellten Redundanz-Antwortnachrichten AN1 und AN2 deutlicher, d.h. die Prüfinformation CHK bleibt erhalten, während die Adressinformation SID wieder in die ursprüngliche, an sich richtige Form zurückmaskiert wird, nämlich für die Antwortnachricht AN1 in "1.0" gewandelt (entsprechend der Adresse des Verarbeitungsservers 30) und in der Antwortnachricht AN2 in "0.1" entsprechend der Adresse des Verarbeitungsservers 50.

## Patentansprüche

1. Verfahren zur Verarbeitung einer eine zu verarbeitende Information (VI) enthaltenden Anfragenachricht (RQ) eines Steuergeräts (95) eines Straßenfahrzeugs (90) durch eine Serveranordnung (10), die über ein Kommunikationsnetz (NW), insbesondere das Internet und/oder ein Mobilfunknetz, mit dem Straßenfahrzeug (90) verbunden ist, mit den Schritten:
- Senden der Anfragenachricht (RQ) über das Kommunikationsnetz (NW) durch das Steuergerät (95) zu einem Verteiler-Server (20) der Serveranordnung (10),
- Senden einer ersten die zu verarbeitende Information (VI) enthaltenden Redundanz-Anfragenachricht (RQ1) an einen ersten Verarbeitungsserver (30) und einer zweiten die zu verarbeitende Information (VI) enthaltenden Redundanz-Anfragenachricht (RQ2) an einen zweiten Verarbeitungsserver (50) durch den Verteiler-Server (20), wobei die Verarbeitungsserver (30, 50) für eine gleichartige oder gleiche Bearbeitung der zu verarbeitenden Information (VI) zueinander redundant sind,
- Erzeugen einer ersten Redundanz-Antwortnachricht (AN1) auf Basis der in der ersten Redundanz-Anfragenachricht (RQ1) enthaltenen Information (VI) und Senden der ersten Redundanz-Antwortnachricht (AN1) an den Verteiler-Server (20) durch den ersten Verarbeitungsserver (30),
- Erzeugen einer zweiten Redundanz-Antwortnachricht (AN2) auf Basis der in der zweiten Redundanz-Anfragenachricht (RQ2) enthaltenen Information (VI) und Senden der zweiten Redundanz-Antwortnachricht (AN2) an den Verteiler-Server (20) durch den zweiten Verarbeitungsserver (50), und
- Erzeugen und Senden einer Antwortnachricht (AN) auf Basis der ersten Redundanz-Antwortnachricht (AN1) und der zweiten Redundanz-Antwortnachricht (AN2) durch den Verteiler-Server (20) an das Steuergerät (95), **gekennzeichnet durch** eine Ende-zu-Ende-Überprüfung mindestens einer Redundanz-Anfragenachricht (RQ1, RQ2) oder zumindest der darin enthaltenen zu verarbeitenden Information (VI) durch den ersten Verarbeitungsserver (30) und den zweiten Verarbeitungsserver, wobei die Ende-zu Ende-Überprüfung eine Überprüfung mindestens einer durch das Steuergerät (95) bereitgestellten Prüfinformation, insbesondere einer durch das Steuergerät (95) mitgeteilten Zeitinformation und/oder einer durch das Steuergerät (95) erzeugten Prüfsumme, umfasst.

2. Verfahren nach Anspruch 1, **dadurch gekennzeichnet, dass** der Verteiler-Server (20) mit der ersten Redundanz-Anfragenachricht (RQ1) eine Adressinformation (SID) des zweiten Verarbeitungsservers (50) an den ersten Verarbeitungsserver (30) und mit der zweiten Redundanz-Anfragenachricht (RQ2) eine Adressinformation (SID) des ersten Verarbeitungsservers (30) an den zweiten Verarbeitungsserver (50) versendet.

3. Verfahren nach Anspruch 1 oder 2, **dadurch gekennzeichnet, dass** der erste Verarbeitungsserver (30) und der zweite Verarbeitungsserver (50) anhand der erhaltenen Adressinformationen (SID) einander jeweils mindestens eine Überprüfungsnachricht (UN1, UN2) zur Überprüfung ihrer wechselseitigen Redundanz und/oder zur Überprüfung, dass sie auf physikalisch getrennten Verarbeitungsplattformen angeordnet sind, senden.

4. Verfahren nach einem der vorhergehenden Ansprüche, **dadurch gekennzeichnet, dass** der erste Verarbeitungsserver (30) und der zweite Verarbeitungsserver (50) eine in der jeweils zu versendenden Redundanz-Antwortnachricht (AN1, AN2) enthaltene Antwortinformation (AI) auf zumindest teilweise oder vollständige bitweise Übereinstimmung vor dem Versenden der Antwortinformation (AI) in der ersten Redundanz-Antwortnachricht (AN1) und der zweiten Redundanz-Antwortnachricht (AN2) abgleichen.

5. Verfahren nach einem der vorhergehenden Ansprüche, **dadurch gekennzeichnet, dass** der erste Verarbeitungsserver (30) und/oder der zweite Verarbeitungsserver (50) eine zur Auswertung durch das Steuergerät (95) vorgesehene Prüfinformation (CHK) der durch den Verteiler-Server (20) zu versendenden Antwortnachricht (AN) in der jeweiligen ersten und zweiten Redundanz-Antwortnachricht (AN2) bereitstellen, wobei vorteilhaft vorgesehen ist, dass mindestens einer der Verarbeitungsserver (30, 50) eine ihm zugeordnete Adresskennung (SID) durch eine in der durch den Verteiler-Server (20) zu versendenden Antwortnachricht (AN) enthaltene Adresskennung (SID) zur Erzeugung der Prüfinformation (CHK) verwendet und/oder dass mindestens einer der Verarbeitungsserver (30, 50) eine durch die Prüfinformation (CHK), insbesondere eine Prüfsumme, überprüfte Information in der Redundanz-Antwortnachricht (AN1, AN2) durch eine alternative Information, insbesondere eine ihm zugeordnete Adresskennung (SID), ersetzt.

6. Verfahren nach einem der vorhergehenden Ansprüche, **dadurch gekennzeichnet, dass** das Erzeugen der Antwortnachricht (AN) mindestens eine Vergleichsoperation und/oder Verknüpfungsoperation enthält, bei der in der ersten Redundanz-Antwortnachricht (AN1) enthaltene erste Daten und in der zweiten Redundanz-Antwortnachricht (AN2) enthaltene zweite Daten durch den Verteiler-Server (20) miteinander verglichen oder, insbesondere anhand einer logischen Oder-Operation, verknüpft werden, wobei vorteilhaft vorgesehen ist, dass der Verteiler-Server (20) die Antwortnachricht (AN) durch eine logische Oder-Verknüpfung der ersten Redundanz-Antwortnachricht (AN1) mit der zweiten Redundanz-Antwortnachricht (AN2) erzeugt, wobei die Antwortnachricht (AN) vorzugsweise mindestens eine zur Überprüfung durch das Steuergerät (95) vorgesehene Prüfinformation (CHK) enthält, die für den durch die Prüfinformation (CHK) als geprüft qualifizierten Inhalt der Antwortnachricht (AN) erst nach der logischen Oder-Verknüpfung der Redundanz-Antwortnachrichten (AN1, AN2) richtig ist.

7. Serveranordnung (10) zur Verarbeitung einer eine zu verarbeitende Information (VI) enthaltenden Anfragenachricht eines Steuergeräts (95) eines Straßenfahrzeugs (90), wobei die Serveranordnung (10) über ein Kommunikationsnetz (NW), insbesondere das Internet und/oder ein Mobilfunknetz, mit dem Straßenfahrzeug (90) verbunden ist, wobei die Serveranordnung (10) einen Verteiler-Server (20) sowie mindestens zwei für eine gleichartige oder gleiche Bearbeitung der zu verarbeitenden Information (VI) zueinander redundante Verarbeitungsserver (30, 50) umfasst,
- wobei der Verteiler-Server (20)
eine Kommunikationsschnittstelle (21, 23) zum Empfangen der Anfragenachricht (RQ) des Steuergeräts (95) über das Kommunikationsnetz (NW) und zum Senden einer ersten die zu verarbeitende Information (VI) enthaltenden Redundanz-Anfragenachricht (RQ1) an den ersten Verarbeitungsserver (30) der Serveranordnung (10) und einer zweiten die zu verarbeitende Information (VI) enthaltenden Redundanz-Anfragenachricht (RQ2) an den zweiten Verarbeitungsserver (50) und
Erzeugungsmittel (66) zum Erzeugen einer Antwortnachricht (AN) auf Basis einer ersten, von dem ersten Verarbeitungsserver (30) zu der ersten Redundanz-Anfragenachricht (RQ1) erhaltenen Redundanz-Antwortnachricht (AN1) und einer zweiten, von dem zweiten Verarbeitungsserver (50) zu der zweiten Redundanz-Anfragenachricht (RQ2) erhaltenen Redundanz-Antwortnachricht (AN2), aufweist, wobei der Verteiler-Server (20) zum Versenden der Antwortnachricht (AN) über die Kommunikationsschnittstelle (21, 23) an das Steuergerät (95) ausgestaltet ist,
- wobei der erste Verarbeitungsserver (30) eine Kommunikationsschnittstelle (32) zur Kommunikation mit dem Verteiler-Server (20) und Erzeugungsmittel (62A, 62B) zum Erzeugen einer ersten Redundanz-Antwortnachricht (AN1) auf Basis der in der ersten Redundanz-Anfragenachricht (RQ1) enthaltenen Information (VI) und Senden der ersten Redundanz-Antwortnachricht (AN1) an den Verteiler-Server (20) durch den ersten Verarbeitungsserver (30) aufweist, und
- wobei der zweite Verarbeitungsserver (50) eine Kommunikationsschnittstelle (52) zur Kommunikation mit dem Verteiler-Server (20) und Erzeugungsmittel (62A, 62B) zum Erzeugen einer zweiten Redundanz-Antwortnachricht (AN2) auf Basis der in der zweiten Redundanz-Anfragenachricht (RQ2) enthaltenen Information (VI) und Senden der zweiten Redundanz-Antwortnachricht (AN2) an den Verteiler-Server (20) durch den zweiten Verarbeitungsserver (50) aufweist, **dadurch gekennzeichnet, dass** der erste Verarbeitungsserver (30) und der zweiten Verarbeitungsserver Überprüfungsmittel (60) zu einer Ende-zu-Ende-Überprüfung mindestens einer Redundanz-Anfragenachricht (RQ1, RQ2) oder zumindest der darin enthaltenen zu verarbeitenden Information (VI) aufweisen, wobei die Ende-zu Ende-Überprüfung eine Überprüfung mindestens einer durch das Steuergerät (95) bereitgestellten Prüfinformation, insbesondere einer durch das Steuergerät (95) mitgeteilten Zeitinformation und/oder einer durch das Steuergerät (95) erzeugten Prüfsumme, umfasst.

8. Serveranordnung (10) nach Anspruch 7, **dadurch gekennzeichnet, dass** der erste Verarbeitungsserver (30) oder der zweite Verarbeitungsserver (50) anhand von im Zusammenhang mit der jeweiligen ersten oder zweiten Redundanz-Anfragenachricht (RQ1, RQ2) erhaltenen Adressinformationen (SID) des jeweils anderen ersten oder zweiten Redundanz-Verarbeitungsservers zum Versenden und/oder Empfangen einer Überprüfungsnachricht (UN1, UN2) zur Überprüfung einer wechselseitigen Redundanz der Verarbeitung und/oder zur Überprüfung, dass die Verarbeitungsserver auf physikalisch getrennten Verarbeitungsplattformen angeordnet sind, ausgestaltet ist.

9. Serveranordnung (10) nach Anspruch 7 oder 8, **dadurch gekennzeichnet, dass** der erste Verarbeitungsserver (30) oder der zweite Verarbeitungsserver (50) zum Abgleich einer in der jeweils zu versendenden Redundanz-Antwortnachricht (AN1, AN2) enthaltenen Antwortinformation (AI) auf zumindest teilweise oder vollständige bitweise Übereinstimmung vor dem Versenden der Antwortinformation (AI) in der von ihm zu versendenden Redundanz-Antwortnachricht (AN1, AN2) mit dem jeweils anderen ersten oder zweiten Verarbeitungsserver ausgestaltet ist.

10. Serveranordnung (10) nach Anspruch 7, 8 oder 9, **dadurch gekennzeichnet, dass** der erste Verarbeitungsserver (30) oder der zweite Verarbeitungsserver (50) Bereitstellungsmittel (64) zur Bereitstellung einer zur Auswertung durch das Steuergerät (95) vorgesehenen Prüfinformation (CHK) der durch den Verteiler-Server (20) zu versendenden Antwortnachricht in der jeweiligen ersten oder zweiten Redundanz-Antwortnachricht (RQ1, RQ2) aufweist, wobei vorteilhaft vorgesehen ist, dass die Bereitstellungsmittel (64) eine dem Verarbeitungsserver zugeordnete Adresskennung (SID) durch eine in der durch den Verteiler-Server (20) zu versendenden Antwortnachricht (AN) enthaltene Adresskennung (SID) zur Erzeugung der Prüfinformation (CHK) verwenden und/oder eine durch die Prüfinformation (CHK), insbesondere eine Prüfsumme, überprüfte Information in der Redundanz-Antwortnachricht (AN1, AN2) durch eine alternative Information, insbesondere eine dem Verarbeitungsserver (30, 50) zugeordnete Adresskennung (SID), ersetzen.

11. Serveranordnung (10) nach einem der Ansprüche 7 bis 10, **dadurch gekennzeichnet, dass** der Verteiler-Server (20) zum Versenden einer Adressinformation (SID) des zweiten Verarbeitungsservers (50) im Zusammenhang mit der ersten Redundanz-Anfragenachricht (RQ1) an den ersten Verarbeitungsserver (30) und zum Versenden einer Adressinformation (SID) des ersten Verarbeitungsservers (30) im Zusammenhang mit der zweiten Redundanz-Anfragenachricht (RQ2) an den zweiten Verarbeitungsserver (50) ausgestaltet ist.

12. Serveranordnung (10) nach einem der Ansprüche 7 bis 11, **dadurch gekennzeichnet, dass** die Erzeugungsmittel (66) des Verteiler-Servers (20) zum Erzeugen der Antwortnachricht (AN) anhand mindestens einer Vergleichsoperation und/oder Verknüpfungsoperation ausgestaltet sind, bei der in der ersten Redundanz-Antwortnachricht (AN1) enthaltene erste Daten und in der zweiten Redundanz-Antwortnachricht (AN2) enthaltene zweite Daten durch den Verteiler-Server (20) miteinander verglichen oder, insbesondere anhand einer logischen Oder-Operation, verknüpft werden.

13. Serveranordnung (10) nach Anspruch 12, **dadurch gekennzeichnet, dass** die Erzeugungsmittel (66) die Antwortnachricht (AN) durch eine logische Oder-Verknüpfung der ersten Redundanz-Antwortnachricht (AN1) mit der zweiten Redundanz-Antwortnachricht (AN2) erzeugen, wobei die Antwortnachricht (AN) vorzugsweise mindestens eine zur Überprüfung durch das Steuergerät (95) vorgesehene Prüfinformation (CHK) enthält, die für den durch die Prüfinformation (CHK) als geprüft qualifizierten Inhalt der Antwortnachricht (AN) erst nach der logischen Oder-Verknüpfung der Redundanz-Antwortnachrichten (AN1, AN2) richtig ist.

## Claims

1. Method of processing a request message (RQ), containing information (VI) to be processed, of a control unit (95) of a road vehicle (90), by a server array (10) which is connected to the road vehicle (90) via a communications network (NW), in particular the internet or a mobile radio network, with the steps:
- sending of the request message (RQ) by the control unit (95) via the communications network (NW) to a distribution server (20) of the server array (10),
- sending of a first redundant request message (RQ1) containing information (VI) to be processed to a first processing server (30) and a second redundant request message (RQ2) containing information (VI) to be processed to a second processing server (50) by the distribution server (20), wherein the processing servers (30, 50) are redundant to one another for a similar or identical processing of the information (VI) to be processed,
- generation of a first redundant reply message (AN1) on the basis of the information (VI) contained in the first redundant request message (RQ1) and sending of the first redundant reply message (AN1) to the distribution server (20) by the first processing server (30),
- generation of a second redundant reply message (AN2) based on the information (VI) contained in the second redundant request message (RQ2) and sending of the second redundant reply message (AN2) to the distribution server (20) by the second processing server (50), and
- generation and sending of a reply message (AN), based on the first redundant reply message (AN1) and the second redundant reply message (AN2), by the distribution server (20) to the control unit (95), **characterised by** an end-to-end verification of at least one redundant request message (RQ1, RQ2) or at least the information (VI) to be processed contained therein by the first processing server (30) and the second processing server, wherein the end-to-end verification includes at least one check information item provided by the control unit (95), in particular time information provided by the control unit (95) and/or a checksum generated by the control unit (95).

2. Method according to claim 1, **characterised in that** the distribution server (20) sends with the first redundant request message (RQ1) address information (SID) of the second processing server (50) to the first processing server (30), and with the second redundant request message (RQ2) it sends address information (SID) of the first processing server (30) to the second processing server (50).

3. Method according to claim 1 or 2, **characterised in that** the first processing server (30) and the second processing server (50), with the aid of the received address information (SID), send to one another respectively at least one verification message (UN1, UN2) to verify their mutual redundancy and/or to verify that they are mounted on physically separate processing platforms.

4. Method according to any of the preceding claims, **characterised in that** the first processing server (30) and the second processing server (50) compare reply information (AI) contained in the respective redundant reply message (AN1, AN2) to be sent for at least partial or complete bit-by-bit agreement before sending the reply information (AI) in the first redundant reply message (AN1) and the second redundant reply message (AN2).

5. Method according to any of the preceding claims, **characterised in that** the first processing server (30) and/or the second processing server (50) make available check information (CHK) provided for evaluation by the control unit (95) of the reply message (AN) to be sent by the distribution server (20) in the respective first and second redundant reply message (AN2), wherein advantageously it is provided that at least one of the processing servers (30, 50) uses an address identifier (SID) assigned to it by an address identifier (SID) contained in the reply message (AN) to be sent by the distribution server (20) to generate the check information (CHK), and/or that at least one of the processing servers (30, 50) replaces information in the redundant reply message (AN1, AN2) verified by the check information (CHK), in particular a checksum, with alternative information, in particular an address identifier (SID) assigned to it.

6. Method according to any of the preceding claims, **characterised in that** the generation of the reply message (AN) contains at least one comparison operation and/or linking operation in which first data contained in the first redundant reply message (AN1) and second data contained in the second redundant reply message (AN2) are compared with one another by the distribution server (20) or, in particular with the aid of a logical OR operation, are linked together, wherein advantageously it is provided that the distribution server (20) generates the reply message (AN) through a logical OR link of the first redundant reply message (AN1) with the second redundant reply message (AN2), wherein the reply message (AN) preferably contains at least one check information item (CHK) provided for verification by the control unit (95), which is correct for the content of the reply message (AN) qualified as checked only after the OR linking of the redundant reply messages (AN1, AN2).

7. Server array (10) for processing a request message, containing information (VI) to be processed, of a control unit (95) of a road vehicle (90), wherein the server array (10) is connected to the road vehicle (90) via a communications network (NW), in particular the internet or a mobile radio network, wherein the server array (10) includes a distribution server (20) plus at least two processing servers (30, 50), redundant to one another, for similar or identical processing of the information to be processed,
- wherein the distribution server (20)
has a communications interface (21, 23) to receive the request message (RQ) of the control unit (95) over the communications network (NW) and for sending a first redundant request message (RQ1) containing the information (VI) to be processed to the first processing server (30) of the server array (10), and a second redundant request message (RQ2) containing the information (VI) to be processed to the second processing server (50) and
generation means (66) to generate a reply message (AN) on the basis of a first redundant reply message (AN1) obtained by the first processing server (30) in response to the first redundant request message (RQ1) and a second redundant reply message (AN2) obtained by the second processing server (50) to the second redundant request message (RQ2), wherein the distribution server (20) is designed to send the reply message (AN) via the communications interface (21, 23) to the control unit (95),
- wherein the first processing server (30) has a communications interface (32) for communication with the distribution server (20) and generation means (62A, 62B) to generate a first redundant reply message (AN1) on the basis of the information (VI) contained in the first redundant request message (RQ1) and for sending the first redundant reply message (AN1) to the distribution server (20) by the first processing server (30), and
- wherein the second processing server (50) has a communications interface (52) for communication with the distribution server (20) and generation means (62A, 62B) for generating a second redundant reply message (AN2) on the basis of the information (VI) contained in the second redundant request message (RQ2) and for sending the second redundant reply message (AN2) to the distribution server (20) by the second processing server (50), **characterised in that** the first processing server (30) and the second processing server have verification means (60) for end-to-end verification of at least one redundant request message (RQ1, RQ2) or at least the information (VI) to be processed contained therein, wherein the end-to-end verification includes a verification of at least one check information item provided by the control unit (95), in particular time information provided by the control unit (95) and/or a checksum generated by the control unit (95).

8. Server array (10) according to claim 7, **characterised in that** the first processing server (30) or the second processing server (50) is designed with the aid of address information (SID), obtained in connection with the respective first or second redundant request message (RQ1, RQ2), of the respective other first or second redundant processing server, to send and/or receive a verification message (UN1, UN2) for verification of mutual redundancy of the processing message and/or to verify that the processing servers are mounted on physically separate processing platforms.

9. Server array (10) according to claim 7 or 8, **characterised in that** the first processing server (30) or the second processing server (50) is designed to compare reply information (AI) contained in the respective redundant reply message (AN1, AN2) to be sent for at least partial or complete bit-by-bit agreement before sending the reply information (AI) in the redundant reply message (AN1, AN2) to be sent by it with the respective other first or second processing server.

10. Server array (10) according to claim 7, 8 or 9, **characterised in that** the first processing server (30) or the second processing server (50) has provision means (64) to supply check information (CHK), provided by the control unit (95), of the reply information to be sent by the distribution server (20) in the respective first or second redundant request message (RQ1, RQ2), wherein advantageously it is provided that the provision means (64) use to generate the check information (CHK) an address identifier (SID) assigned to the processing server by an address identifier (SID) contained in the reply message (AN) to be sent by the distribution server (20) and/or replace information in the redundant reply message (AN1, AN2) verified by the check information (CHK), in particular a checksum, by alternative information, in particular an address identifier (SID) assigned to the processing server (30, 50).

11. Server array (10) according to any of claims 7 to 10, **characterised in that** the distribution server (20) is designed to send address information (SID) of the second processing server (50) in connection with the first redundant request message (RQ1) to the first processing server (30) and to send address information (SID) of the first processing server (30) in connection with the second redundant request message (RQ2) to the second processing server (50).

12. Server array (10) according to any of claims 7 to 11, **characterised in that** the generation means (66) of the distribution server (20) are designed to generate the reply message (AN) with the aid of at least one comparison operation and/or linking operation, in which the first data contained in the first redundant reply message (AN1) and the second data contained in the second redundant reply message (AN2) are compared with one another or, in particular with the aid of a logical OR operation, are linked together.

13. Server array (10) according to claim 12, **characterised in that** the generation means (66) generate the reply message (AN) through a logical OR link of the first redundant reply message (AN1) with the second redundant reply message (AN2), wherein the reply message (AN) preferably contains at least one check information item (CHK) provided for verification by the control unit (95), which is correct for the content of the reply message (AN) qualified as checked only after the OR linking of the redundant reply messages (AN1, AN2).

## Revendications

1. Procédé de traitement d'un message de demande (RQ) contenant une information à traiter (VI) d'un appareil de commande (95) d'un véhicule routier (90) par un ensemble serveur (10), qui est relié au véhicule routier (90) par l'intermédiaire d'un réseau de communication (NW), en particulier d'Internet et/ou d'un réseau de radiotéléphonie mobile, avec les étapes:
- d'envoi du message de demande (RQ) par l'intermédiaire du réseau de communication (NW) par l'appareil de commande (95) à un serveur distributeur (20) de l'ensemble serveur (10),
- d'envoi d'un premier message de demande de redondance (RQ1) contenant l'information à traiter (VI) à un premier serveur de traitement (30) et d'un deuxième message de demande de redondance (RQ2) contenant l'information à traiter (VI) à un deuxième serveur de traitement (50) par le serveur distributeur (20), dans lequel les serveurs de traitement (30, 50) sont redondants les uns par rapport aux autres pour un traitement similaire ou identique de l'information à traiter (VI),
- de génération d'un premier message de réponse de redondance (AN1) sur la base de l'information (VI) contenue dans le premier message de demande de redondance (RQ1) et d'envoi du premier message de réponse de redondance (AN1) au serveur distributeur (20) par le premier serveur de traitement (30),
- de génération d'un deuxième message de réponse de redondance (AN2) sur la base de l'information (VI) contenue dans le deuxième message de demande de redondance (RQ2) et d'envoi du deuxième message de réponse de redondance (AN2) au serveur distributeur (20) par le deuxième serveur de traitement (50), et
- de génération et d'envoi d'un message de réponse (AN) sur la base du premier message de réponse de redondance (AN1) et du deuxième message de réponse de redondance (AN2) par le serveur distributeur (20) à l'appareil de commande (95), **caractérisé par** une vérification de bout en bout d'au moins un message de demande de redondance (RQ1, RQ2) ou d'au moins l'information à traiter (VI) contenue dans ceux-ci par le premier serveur de traitement (30) et le deuxième serveur de traitement, dans lequel la vérification de bout en bout comprend une vérification d'au moins une information de contrôle fournie par l'appareil de commande (95), en particulier une information de temps partagée par l'appareil de commande (95) et/ou d'une somme de contrôle générée par l'appareil de commande (95).

2. Procédé selon la revendication 1, **caractérisé en ce que** le serveur distributeur (20) envoie au premier serveur de traitement (30) avec le premier message de demande de redondance (RQ1) une information d'adresse (SID) du deuxième serveur de traitement (50) et au deuxième serveur de traitement (50) avec le deuxième message de demande de redondance (RQ2) une information d'adresse (SID) du premier serveur de traitement (30).

3. Procédé selon la revendication 1 ou 2, **caractérisé en ce que** le premier serveur de traitement (30) et le deuxième serveur de traitement (50) envoient à l'aide des informations d'adresse (SID) obtenues respectivement au moins un message de vérification (UN1, UN2) servant à vérifier leur redondance mutuelle et/ou servant à vérifier qu'ils sont disposés sur des plates-formes de traitement physiquement séparées.

4. Procédé selon l'une quelconque des revendications précédentes, **caractérisé en ce que** le premier serveur de traitement (30) et le deuxième serveur de traitement (50) ajustent une information de réponse (AI) contenue dans le message de réponse de redondance (AN1, AN2) à envoyer respectivement sur une concordance par bits au moins partielle ou totale avant l'envoi de l'information de réponse (AI) dans le premier message de réponse de redondance (AN1) et le deuxième message de réponse de redondance (AN2).

5. Procédé selon l'une quelconque des revendications précédentes, **caractérisé en ce que** le premier serveur de traitement (30) et/ou le deuxième serveur de traitement (50) fournissent une information de contrôle (CHK), prévue aux fins de l'évaluation par l'appareil de commande (95), du message de réponse (AN) à envoyer par le serveur distributeur (20) dans le premier et le deuxième message de réponse de redondance (AN2) respectif, dans lequel il est avantageusement prévu qu'au moins un des serveurs de traitement (30, 50) utilise un code d'adresse (SID) qui lui est associé par un code d'adresse (SID) contenu dans le message de réponse (AN) à envoyer par le serveur distributeur (20) pour générer l'information de contrôle (CHK), et/ou qu'au moins un des serveurs de traitement (30, 50) remplace une information vérifiée par l'information de contrôle (CHK), en particulier une somme de contrôle dans le message de réponse de redondance (AN1, AN2) par une information en variante, en particulier un code d'adresse (SID) qui lui est associé.

6. Procédé selon l'une quelconque des revendications précédentes, **caractérisé en ce que** la génération du message de réponse (AN) contient au moins une opération de comparaison et/ou une opération de combinaison, dans laquelle des premières données contenues dans le premier message de réponse de redondance (AN1) et des deuxièmes données contenues dans le deuxième message de réponse de redondance (AN2) sont comparées entre elles par le serveur distributeur (20) ou sont combinées en particulier à l'aide d'une opération logique ou, dans lequel il est avantageusement prévu que le serveur distributeur (20) génère le message de réponse (AN) par une combinaison logique ou du premier message de réponse de redondance (AN1) au deuxième message de réponse de redondance (AN2), dans lequel le message de réponse (AN) contient de préférence au moins une information de contrôle (CHK) prévue pour la vérification par l'appareil de commande (95), qui est correcte pour le contenu, qualifié de contrôlé par l'information de contrôle (CHK), du message de réponse (AN) seulement après la combinaison logique ou des messages de réponse de redondance (AN1, AN2).

7. Ensemble serveur (10) servant à traiter un message de demande, contenant une information (VI) à traiter, d'un appareil de commande (95) d'un véhicule routier (90), dans lequel l'ensemble serveur (10) est relié par l'intermédiaire d'un réseau de communication (NW), en particulier l'Internet et/ou un réseau de radiotéléphonie mobile, au véhicule routier (90), dans lequel l'ensemble serveur (10) comprend un serveur distributeur (20) ainsi qu'au moins deux serveurs de traitement (30, 50) redondants l'un par rapport à l'autre pour un traitement similaire ou identique de l'information (VI) à traiter,
- dans lequel le serveur distributeur (20) présente
une interface de communication (21, 23) servant à recevoir le message de demande (RQ) de l'appareil de commande (95) par l'intermédiaire du réseau de communication (NW) et pour envoyer un premier message de demande de redondance (RQ1) contenant l'information (VI) à traiter au premier serveur de traitement (30) de l'ensemble serveur (10) et un deuxième message de demande de redondance (RQ2) contenant l'information (VI) à traiter au deuxième serveur de traitement (50), et
des moyens de génération (66) servant à générer un message de réponse (AN) sur la base d'un premier message de réponse de redondance (AN1) obtenu du premier serveur distributeur (30) concernant le premier message de demande de redondance (RQ1) et d'un deuxième message de réponse de redondance (AN2) obtenu du deuxième serveur de traitement (50) concernant le deuxième message de demande de redondance (RQ2), dans lequel le serveur distributeur (20) est configuré pour envoyer le message de réponse (AN) par l'intermédiaire de l'interface de communication (21, 23) à l'appareil de commande (95),
- dans lequel le premier serveur de traitement (30) présente une interface de communication (32) servant à la communication avec le serveur distributeur (20) et des moyens de génération (62A, 62B) servant à générer un premier message de réponse de redondance (AN1) sur la base de l'information (VI) contenue dans le premier message de demande de redondance (RQ1) et pour envoyer le premier message de réponse de redondance (AN1) au serveur distributeur (20) par le premier serveur de traitement (30), et
- dans lequel le deuxième serveur de traitement (50) présente une interface de communication (52) servant à la communication avec le serveur distributeur (20) et des moyens de génération (62A, 62B) servant à générer un deuxième message de réponse de redondance (AN2) sur la base de l'information (VI) contenue dans le deuxième message de demande de redondance (RQ2) et pour envoyer le deuxième message de réponse de redondance (AN2) au serveur distributeur (20) par le deuxième serveur de traitement (50), **caractérisé en ce que** le premier serveur distributeur (30) et le deuxième serveur distributeur présentent des moyens de vérification (60) pour une vérification de bout en bout d'au moins un message de demande de redondance (RQ1, RQ2) ou au moins de l'information (VI) à traiter contenue dans celui-ci, dans lequel la vérification de bout en bout comprend une vérification d'au moins une information de contrôle fournie par l'appareil de commande (95), en particulier d'une information de temps partagée par l'appareil de commande (95) et/ou d'une somme de contrôle générée par l'appareil de commande (95).

8. Ensemble serveur (10) selon la revendication 7, **caractérisé en ce que** le premier serveur de traitement (30) ou le deuxième serveur de traitement (50) est configuré pour, à l'aide d'informations d'adresse (SID), obtenues en lien avec le premier ou le deuxième message de demande de redondance (RQ1, RQ2) respectif, de respectivement l'autre premier ou deuxième serveur de traitement de redondance, envoyer et/ou recevoir un message de vérification (UN1, UN2) servant à vérifier une redondance mutuelle du traitement et/ou servant à vérifier que les serveurs de traitement sont disposés sur des plates-formes de traitement séparées physiquement.

9. Ensemble serveur (10) selon la revendication 7 ou 8, **caractérisé en ce que** le premier serveur de traitement (30) ou le deuxième serveur de traitement (50) est configuré pour ajuster une information de réponse (AI) contenue dans le message de réponse de redondance (AN1, AN2) à envoyer respectivement sur une concordance par bits au moins partielle ou totale avant l'envoi de l'information de réponse (AI) dans le message de réponse de redondance (AN1, AN2) à envoyer par lui avec l'autre premier ou deuxième serveur de traitement respectivement.

10. Ensemble serveur (10) selon la revendication 7, 8 ou 9, **caractérisé en ce que** le premier serveur de traitement (30) ou le deuxième serveur de traitement (50) présente des moyens de fourniture (64) servant à fournir une information de contrôle (CHK), prévue pour l'évaluation par l'appareil de commande (95), du message de réponse à envoyer par le serveur distributeur (20) dans le premier ou deuxième message de réponse de redondance (RQ1, RQ2) respectif, dans lequel il est avantageusement prévu que les moyens de fourniture (64) utilisent un code d'adresse (SID) associé au serveur de traitement par un code d'adresse (SID) contenu dans le message de réponse (AN) à envoyer par le serveur distributeur (20) pour générer l'information de contrôle (CHK) et/ou remplacent une information vérifiée par l'information de contrôle (CHK), en particulier une somme de contrôle, dans le message de réponse de redondance (AN1, AN2) par une information en variante, en particulier un code d'adresse (SID) associé au serveur de traitement (30, 50).

11. Ensemble serveur (10) selon l'une quelconque des revendications 7 à 10, **caractérisé en ce que** le serveur distributeur (20) est configuré pour envoyer une information d'adresse (SID) du deuxième serveur de traitement (50) en lien avec le premier message de demande de redondance (RQ1) au premier serveur de traitement (30) et pour envoyer une information d'adresse (SIF) du premier serveur de traitement (30) en lien avec le deuxième message de demande de redondance (RQ2) au deuxième serveur de traitement (50).

12. Ensemble serveur (10) selon l'une quelconque des revendications 7 à 11, **caractérisé en ce que** les moyens de génération (66) du serveur distributeur (20) sont configurés pour générer le message de réponse (AN) à l'aide d'au moins une opération de comparaison et/ou d'une opération de combinaison, dans laquelle des premières données contenues dans le premier message de réponse de redondance (AN1) et des deuxièmes données contenues dans le deuxième message de réponse de redondance (AN2) sont comparées par le serveur distributeur (20) entre elles ou sont combinées, en particulier à l'aide d'une opération logique ou.

13. Ensemble serveur (10) selon la revendication 12, **caractérisé en ce que** les moyens de génération (66) génèrent le message de réponse (AN) par une combinaison logique ou du premier message de réponse de redondance (AN1) avec le deuxième message de réponse de redondance (AN2), dans lequel le message de réponse (AN) contient de préférence au moins une information de contrôle (CHK) prévue pour la vérification par l'appareil de commande (95), qui est correcte pour le contenu, qualifié de contrôlé par l'information de contrôle (CHK), du message de réponse (AN) seulement après la combinaison logique ou des messages de réponse de redondance (AN1, AN2).
